# EUROPEAN PATENT SPECIFICATION

(11) **EP 3 414 808 B1**
(45) Date of publication and mention of the grant of the patent: **05.01.2022**
(21) Application number: 17750646.6
(22) Date of filing: 07.02.2017
(51) Int. Cl.: H02H 3/00, G05B 9/02, G05B 11/01, G05D 3/12, H02H 3/40, H02H 3/44, H02H 11/00

(54) **DIGITAL ELECTRICITY TRANSMISSION SYSTEM USING REVERSAL SENSING PACKET ENERGY TRANSFER**
DIGITALES STROMÜBERTRAGUNGSSYSTEM MIT UMKEHRERFASSENDER PAKETENERGIEÜBERTRAGUNG
SYSTÈME DE TRANSMISSION D'ÉLECTRICITÉ NUMÉRIQUE UTILISANT UN TRANSFERT D'ÉNERGIE PAR PAQUETS À DÉTECTION D'INVERSION

(30) Priority: 08.02.2016 US 201662292596 P
(43) Date of publication of application: 19.12.2018
(73) Proprietor: Voltserver, Inc., East Greenwich, Rhode Island 02818 (US)
(72) Inventor: EAVES, Stephen, East Greenwich, Rhode Island 02818 (US)
(74) Representative: Smith, Jeremy Robert
(86) International application number: PCT/US2017/016870
(87) International publication number: WO 2017/139289

(56) References cited:
- EP-A2- 2 608 399
- DE-A1- 19 951 094
- DE-C2- 19 951 094
- US-A1- 2004 227 521
- US-A1- 2004 263 321
- US-A1- 2007 260 904
- US-A1- 2010 156 426
- US-A1- 2011 292 697
- US-A1- 2012 075 759
- US-A1- 2013 103 220
- US-A1- 2014 133 203
- US-A1- 2014 177 293
- US-A1- 2015 215 001
- US-A1- 2015 217 749

## Description

### Field of Invention

This invention relates to power distribution system safety protection devices-for example, power distribution systems with electronic monitoring to detect and disconnect power in the event of an electrical fault or safety hazard, particularly where an individual has come in contact with exposed conductors. This invention is applicable to general power distribution, or more specifically to, *e*.*g*., electric vehicle charging, telecommunications or alternative energy power systems.

### Background

Digital electric power, or digital electricity, can be characterized as any power format where electrical power is distributed in discrete, controllable units of energy. Packet energy transfer (PET) is a new type of digital electric power protocol disclosed in U.S. Pat. No. 8,781,637 (Eaves 2012).

The primary discerning factor in a digital power transmission system compared to traditional, analog power systems is that the electrical energy is separated into discrete units; and individual units of energy can be associated with analog and/or digital information that can be used for the purposes of optimizing safety, efficiency, resiliency, control or routing.

As described by Eaves 2012, a source controller and a load controller are connected by power transmission lines. The source controller of Eaves 2012 periodically isolates (disconnects) the power transmission lines from the power source and analyzes, at a minimum, the voltage characteristics present at the source controller terminals directly before and after the lines are isolated. The time period when the power lines are isolated was referred to by Eaves 2012 as the "sample period", and the time period when the source is connected is referred to as the "transfer period". The rate of rise and decay of the voltage on the lines before, during and after the sample period reveal if a fault condition is present on the power transmission lines. Measurable faults include, but are not limited to, short circuit, high line resistance or the presence of an individual who has improperly come in contact with the lines.

Eaves 2012 also describes digital information that may be sent between the source and load controllers over the power transmission lines to further enhance safety or provide general characteristics of the energy transfer, such as total energy or the voltage at the load controller terminals. Since the energy in a PET system is transferred as discrete quantities, or quanta, it can be referred to as "digital power" or "digital electricity".

US 2012/075759 A1 discloses a power distribution system that can detect an unsafe fault condition where an individual or object has come in contact with the power conductors.

US 2015/215001 A1 discloses a method for communicating data between a digital power transmitter and one or more digital power receivers over a transmission line comprising positive and negative conductors, wherein the transmission line has electrical properties that include at least a finite line-to-line capacitance and at least a finite line-to-line resistance.

DE 199 51 094 A1 discloses a method of securing an electrical network containing a battery, in particular the on-board network of mobile units, motor vehicles, boats and the like, against polarity reversal, short circuit and / or overvoltage, that is characterized in that a reduced current flow from an external starting point to the battery is detected and only if the specified limit values are adhered to, the jump-starting point is directly connected to the battery and the on-board electrical system.

US 2015/217749 A1 discloses a method for checking a functional state of an automatic parking brake system having a control unit and an actuator configured to generate an electromagnetic braking force that includes actuating the actuator, using the control unit, at a first frequency higher than a second frequency.

US 2010/156426 A1 discloses an apparatus and method for sensing leakage current of battery, and battery-driven apparatus and battery pack comprising the apparatus.

US 2004/227521 A1 discloses an electrical leak detecting apparatus for detecting electrical leak of a power supply device includes two voltage division elements which have an identical impedance value and are connected to each other in series between input terminals or output terminals of a DC/AC conversion circuit of the power supply device, a detection element which has one end connected to a junction of the voltage division elements, a capacitor which is inserted between the other end of the detection element and ground and a decision member which receives a voltage drop across the detection element as a detection signal and processes the detection signal so as to judge occurrence of the electrical leak.

EP 2 608 399 A2 discloses a method for operating an electrical circuit. The circuit comprises a power converter having a plurality of switches and two capacitors connected in series, the power converter having two AC - side connections and starting from the connection point Both capacitors, a measuring resistor is connected to ground. The method determines whether a ground fault exists as a function of a measuring voltage (UM) dropping across the measuring resistor.

### Summary

The invention is set out in the independent claims. A power distribution system regulates transfer of energy from a source on a source side to a load on a load side, wherein the source and load each include terminals. A source controller on the source side is in communication with and responsive to a source sensor that provides feedback to the source controller that includes at least a signal indicative of electric current through the source terminals. A source switching bridge is electrically coupled with the source controller and is responsive to control signals from the source controller for electrically disconnecting the source from the source terminals and for applying a source voltage in either a forward-polarity or reverse-polarity state relative to the source terminals. A load disconnect device is configured to electrically decouple the load from the load terminal. A logic device is implemented in at least the source controller and configured to place the source switching bridge into a reverse-polarity state and to perform at least one current measurement on the current passing through the source terminals when the source switching bridge is in the reverse-polarity state, wherein a current measurement outside of predetermined high or low limits indicates that there is a foreign object or living organism making contact with the source or load terminals or a failure in the power distribution system, and to electrically disconnect the source from the source terminals if the current measurement falls outside the predetermined high and low limits.

In the transfer of energy from a source to a load, a power distribution system is configured to detect unsafe conditions that include electrically conducting foreign objects or individuals that have come in contact with exposed conductors in the power distribution system. A responsive signal is generated in a source controller including source terminals. The responsive signal reverses a voltage on the source terminals. With the voltage on the source terminals reversed, a measurement of electrical current flowing through the source terminals is acquired; and the source controller generates signals to electrically disconnect the source from the source terminals if and when the electrical current falls outside of high or low limits indicating that there is a conducting foreign object or living organism making electrical contact with the source or load terminals or a failure in power distribution system hardware.

The apparatus and methods described herein offer an alternative form of PET using the method of periodically reversing the polarity of the transmission lines. Since the most common forms of electrical faults are polarity independent, the method allows for detection of a fault based on the load device being equipped with a uni-directional switch, such as a diode. When the polarity of the transmission lines are reversed, the flow of electrical current is inhibited by the uni-directional switch. If there is a fault on the transmission lines, such as due to a person touching the lines, electrical current will continue to flow into the fault when the transmission lines are reversed and can be detected by the source controller.

### Brief Description of the Drawings

FIG. 1 is a block diagram of an embodiment of the safe power distribution system.
FIG. 2 is a more detailed block diagram of an embodiment of the source controller.
FIG. 3 is a diagram of a section of an embodiment of the power distribution system with the switching bridge 7 in a non-conducting state.
FIG. 4a is a diagram of a section of an embodiment of the power distribution system with the switching bridge 7 in a forward-conducting state.
FIG. 4b is a diagram of a section of an embodiment of the power distribution system with the switching bridge 7 in a reverse-conducting state,
FIG. 5a is a diagram of a disconnect device 13 constructed using a diode 39.
FIG. 5b is a diagram of a disconnect device 13 constructed using a controllable switch 38.
FIG. 6 is a diagram of an embodiment of an alternative source controller configuration that includes a modulator/demodulator 48 for communications over power lines.
FIG. 7 is a diagram of using center-tapped isolation transformers 52-55 to combine user data and power on common twisted pair cabling.
FIG. 8 is a diagram of an alternative load and load disconnect device 13 using a series string of diodes 70, 72, 74, and 76.

### Detailed Description

The foregoing and other features and advantages of various aspects of the invention will be apparent from the following, more-particular description of various concepts and specific embodiments within the broader bounds of the invention.

Various aspects of the subject matter introduced above and discussed in greater detail below may be implemented in any of numerous ways, as the subject matter is not limited to any particular manner of implementation. Examples of specific implementations and applications are provided primarily for illustrative purposes.

Unless otherwise defined, used or characterized herein, terms that are used herein (including technical and scientific terms) are to be interpreted as having a meaning that is consistent with their accepted meaning in the context of the relevant art and are not to be interpreted in an idealized or overly formal sense unless expressly so defined herein.

The terminology used herein is for the purpose of describing particular embodiments and is not intended to be limiting of exemplary embodiments. As used herein, singular forms, such as "a" and "an," are intended to include the plural forms as well, unless the context indicates otherwise. Additionally, the terms, "includes," "including," "comprises" and "comprising," specify the presence of the stated elements or steps but do not preclude the presence or addition of one or more other elements or steps.

### I. Description of Operation

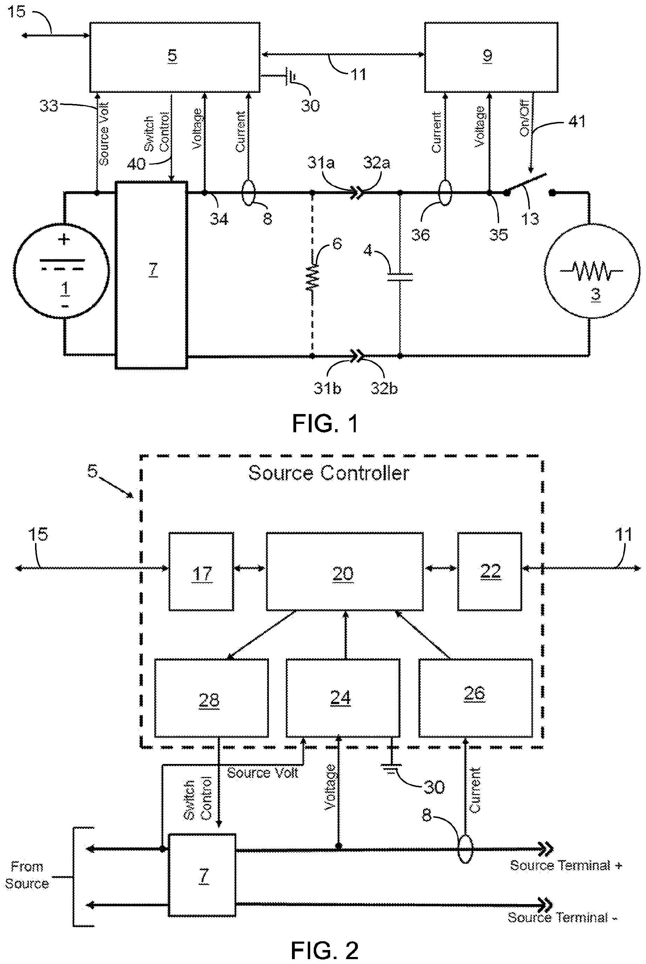

A block diagram of an embodiment of the power distribution system is shown in FIG. 1. The power distribution system regulates the transfer of energy from a source 1 to a load 3. Periodically, the source controller 5 operates a control signal 40 to reverse the polarity of the source terminals 31a and 31b relative to the source 1 using a switching bridge 7 for a predetermined time period, known as the "sample period". During the sample period, the current sensor 8 is employed to measure the current on the transmission lines.

The normal resistance between the source terminals 31a and 31b is represented by R_{src}. In a particular embodiment, R_{src} has a value greater than 1 million Ohms. During normal conditions, when the polarity of the transmission lines is reversed, the current, as sensed by current sensor 8, would be less than 1 milliamp for a source voltage of 380V. However, during a cross-line fault, as depicted in FIG. 1 the resistance of a foreign object 6, such as a human body or conductive element, is introduced and is represented by Rₗₑₐₖ. The parallel combination of R_{src} and Rₗₑₐₖ will increase the current sensed by current sensor 8 significantly. If the current exceeds a predetermined maximum value, a fault is registered and the switching bridge 7 will be placed in a non-conducting state by the source controller 5, where the source 1 is electrically disconnected from the source terminals 31a and 31b.

If no fault conditions are detected, the switching bridge 7 is again commanded to a forward-polarity state. Energy is then transferred between the source 1 and the load 3 until the next sample period. The conducting period between sample periods is referred to as the "transfer period".

An additional check for the in-line fault is where the source and load controllers 5 and 9 acquire their respective terminal voltages at sensing points 34 and 35, as shown in FIG. 1 during an energy transfer period. In embodiments incorporating advanced monitoring options, the communication link 11 would be implemented; and the source controller 5 would obtain the load terminal voltage through the communication link 11. The source controller 5 then calculates the voltage difference between the two measurements. The source controller 5 also acquires the electrical current passing through the source terminals 31a and 31b using a current sensor 8. The source controller 5 can now calculate the line resistance between the source and load terminals 31a/b and 32a/b using Ohm's law, or the relationship: Resistance = Voltage/Current. The calculated line resistance is compared to a predetermined maximum and minimum value. If the maximum is exceeded, switching bridge 7 will be placed in a non-conducting state and an in-line fault is registered. A line resistance that is lower than expected is also an indication of a hardware failure.

An alternative method to measure in-line resistance without a communications link 11 to the load 3 is where the source controller 5 measures the source terminal voltage at sensing point 34 and measures the electrical current passing through the source terminals 31a and 31b using the current sensor 8. The voltage and current samples are made nearly simultaneously during the same energy transfer period. The switching bridge 7 is then placed in a non-conducting state, and the source controller 5 immediately takes another voltage sample at sensing point 34. The difference in magnitude between the first and second voltage samples is proportional to the line resistance. Explained differently, as the transmission line resistance increases, more voltage is dropped across the length of the line for a given current. Since the voltage on the line capacitor 4 is equal to the source voltage minus the voltage drop on the line, measuring the voltage of the transmission lines without current flowing sets the line voltage drop to zero allowing an independent measurement of the voltage across the line capacitor 4. Once the voltage of the line capacitor 4 is known, the voltage drop on the transmission lines can be calculated by subtracting the earlier measurement at point 34 made when line current was present.

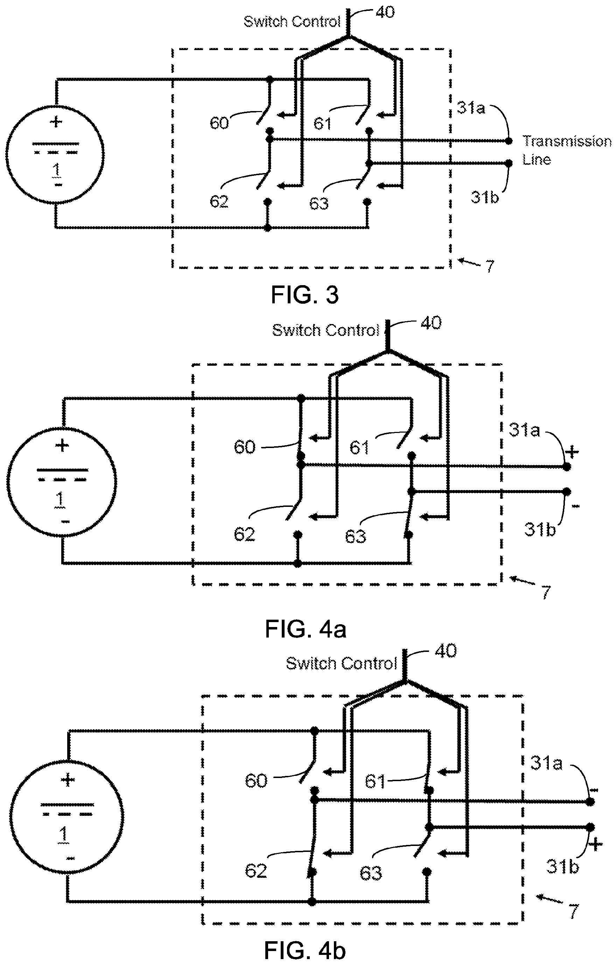

Referring to FIG. 3, the construction of the switching bridge 7 for the reversal of the transmission line voltage is accomplished in this embodiment using what is well known in the industry as a "full-bridge" converter. Switches 60, 61, 62, and 63 would typically be transistors. The transistor type is chosen based on the voltage and current requirements. Industry standard transistors that can be employed include field effect transistors (FETs), integrated gate bipolar transistors (IGBTs) or integrated gate commutated thyristors (IGCTs). The electrical implementation of the control signal 40 for controlling the conduction of the switches in the switching bridge 7 is dependent on the type of transistor but is well known to those skilled in the art of power electronics.

The switching bridge 7 has three states applicable to the present invention: non-conducting, forward-polarity (causes current to flow from the source 1 to the load 3) and reverse-polarity (where no current flows to the load 3 under normal operation). FIG. 3 depicts the non-conducting state since all four switches 60-63 are shown in an open or non-conducting state. In FIG. 4a, switches 60 and 63 are acted on by the control signal 40 to be conducting with the other switches 61 and 62 are in a non-conducting state, putting the switching bridge 7 into the forward-operating state. In FIG. 4b, switches 61 and 62 are acted on by control signal 40 to be conducting with the other switches 60 and 63 are in a non-conducting state, putting the switching bridge 7 into the reverse-polarity state.

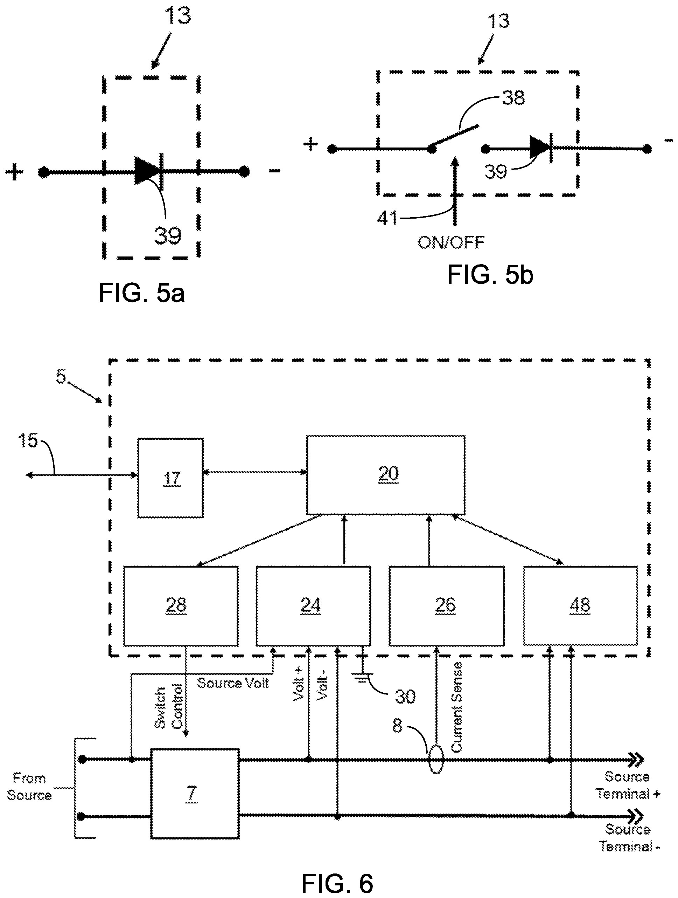

There are a number of industry standard methods for constructing the disconnect device 13 of FIG. 1. Referring to FIG 5a, in cases where it is not necessary for the load controller 9 to have the ability to interrupt power to the load terminals 32a and 32b, internal switch 38 can be constructed using only diode 39 to block the back-flow of electrical current when the switching bridge 7 is in a non-conducting or reverse state. In an embodiment where the load controller 9 is configured to control the action of the disconnect device 13, an arrangement for a disconnect device 13, as shown in FIG. 5b can be used. In this arrangement, electrical current is blocked in the negative-to-positive direction by a blocking diode 39. Current flow in the positive-to-negative direction is controlled by an internal switch 38 according to the application of a control signal 41. The controllable switch 38 provides the capability for the load controller 9 to interrupt power in cases where an unauthorized source of power has been connected to the load terminals 32a and 32b or where the source controller 5 malfunctions and can no longer interrupt power from the source 1. In applications, such as battery charging, uncontrolled overcharging can result in battery damage or fire, thus making a controllable load disconnect switch 38 advantageous. Another advantage of using a controllable switch 38 is to implement what is well known to those skilled in the art as "synchronous" rectification, where the action of the switch 38 is controlled to emulate a diode. This provides the functionality of a diode but with higher efficiency, since a device, such as a field effect transistor, may be employed with lower conduction losses than a diode.

The transistor type used for the internal switch 38 is chosen based on the voltage and current requirements. Industry standard transistors that can be used include FETs, IGBTs or IGCTs. The electrical implementation of the control signal 41 for controlling the conduction of the internal switch 38 is dependent on the type of transistor but is well known to those skilled in the art of power electronics.

As shown in FIG. 2, the source controller 5 includes a microprocessor 20, communication drivers 17 and 22 and signal-conditioning circuits 24, 26, and 28. The load controller 9 of FIG. 1 is similar in construction to the source controller 5 but is configured with different operating software to perform the functions described in the operation sequence section, below. Referring to FIG. 1, before beginning operation, self-check and initialization steps are performed in steps (a), (b) and (c). The switching bridge 7 and the disconnect device 13 (if using a controllable switch 38) are commanded to remain in an open (non-conducting) state during initialization.

### II. Operational Sequence

Referring to FIG. 1, the source controller 5 verifies that the source voltage at point 33 is within a predetermined expected value and that there is no current flowing in the source power conductors, as reported by the current sensor 8. The source controller 5 also performs a built-in testing algorithm, as is typical in the industry, to verify that its hardware and firmware are functioning properly.
a) If the embodiment incorporates advanced monitoring options, a communication check is performed by the source controller 5 through the communication link 11 to the load controller 9. For distribution systems that provide secured energy transfer, the source controller 5 will expect a digital verification code that matches a predetermined value to ensure that the source and load equipment are electrically compatible and authorized to receive power before energy transfer is initiated. For example, a verification code may be utilized for applications where the energy is being purchased. The source controller 5 sends a request (e.g. via an electronic communication) via the communication link 11 to the load controller 9 asking it for its status. The load controller 9 responds (e.g. via another electronic communication) with the value of voltage and current on its conductors and any fault codes. The source controller 5 verifies that the load voltage is within a predetermined value and that there is no current flowing in the load power conductors (indicating a possible failed source disconnect, failed current sensors or other hardware problem). The load controller 9 also performs built-in testing algorithms, as is typical in the industry, to verify that its hardware and firmware are functioning properly. If there is no fault registered, the sequence progresses to step (b). If a fault is registered, the sequence is repeated starting at this step, step (a).
b) The source controller 5 makes another measurement of the source voltage at point 33 to determine the duration of the transfer period, where energy will be transferred from the source 1 to the load 3. The higher the source voltage, the higher the potential fault current; and, hence, the shorter the transfer period. The source voltage measurement is applied to an internal table or function in the processor 20 of the source controller 5 to determine a safe duration value for the transfer period. The use of a variable transfer period is not required for the operation of the disclosed process but can make energy transfer more efficient and less prone to false alarms, since the number of measurements can be maximized and the amount of switching instances can be minimized according the length of the period. The alternative is to maintain a fixed duration transfer period that is configured for the highest possible source voltage and for the worst-case safety conditions.
c) Following the determination of the transfer period, the sample period begins. The source controller 5 acts to place the switching bridge 7 into the reverse-polarity state. If the load circuit 51 incorporates a controllable disconnect switch 38, the load controller 9 senses any reversal in current or decreases in voltage on the transmission lines when the voltage reverses and immediately opens the disconnect switch 13. No action is necessary from the load controller 9 if it is employing a diode 39 to perform the disconnect in the disconnect device 13.
d) Immediately after reversal, the source controller 5 measures the transmission line current using the current sensor 8. If the current value exceeds a predetermined maximum, a hardware fault is registered, and the switching bridge 7 is placed into the non-conducting state. The sequence skips to step (g). If there is no fault registered, the operational sequence continues to step (e).
e) Following the sample period, the source controller 5 acts to put the switching bridge 7 into a forward-polarity state. If the load circuit 51 incorporates a controllable disconnect switch 38, the load controller 9 will sense the rapid increase in voltage across the capacitor 4 measured by a voltage sensor at point 35 and immediately close the disconnect switch 38. No action is necessary if the load circuit 51 uses a diode 39 as a disconnect switch. Both controllers 5 and 9 continue to measure voltage and current at their respective terminals 31a and 31b and 32a and 32b.
f) The source controller 5 calculates the line resistance from the voltage and current samples acquired in steps (c), (d), and (e), using one of the two methods described herein. If there is no serial communication employed between the source and load controllers 5 and 9, the source controller 5 adds a small period where the switching bridge 7 is placed in a non-conducting state directly after the forward-conducting state in the transfer period. The difference in voltage at point 34 of FIG. 1 before and immediately after the switching bridge 7 is placed in the non-conducting state is divided by the current to calculate line resistance. If the source and load controller 5 and 9 are equipped with serial communications, the source controller 5 can request the load voltage reading from the load controller 9 to calculate the voltage difference between the source side and the load side. Dividing the voltage difference by current returns a value for line resistance. If the line resistance is greater than a predetermined maximum value, an in-line fault is registered by the source controller 5. A calculated line resistance less than a predetermined minimum value is indicative of a hardware failure. If a fault is registered, the source controller 5 immediately places the switching bridge 7 into a non-conducting state and proceeds to step (h). If there are no faults registered, the operational sequence repeats, starting at step (c).
g) The power distribution system is in a faulted state due to an in-line fault, cross-line fault or hardware failure. In particular embodiments, the system will allow configuration of either an automatic reset or manual reset from a faulted state. If the system is configured for manual reset, the switching bridge 7 will remain in a non-conducting state until an outside system or operator initiates a restart. The system will then restart the operational sequence from step (a). If the system is configured for automatic restart, then a delay period is executed by the source controller 5 to limit stress on equipment or personnel that may still be in contact with the power distribution conductors. In particular embodiments, the period is from 1 to 60 seconds. The system then restarts the operational sequence from step (a). For an additional level of safety, mechanical contactors may be included in series with the switching bridge 7 and/or with the disconnect switch 38 to act as redundant disconnects in the event that either the switching bridge 7 or the disconnect switch 38 has malfunctioned.

### III. Summary, Ramifications and Scope

The source controller 5 and the load controller 9 can include a logic device, such as a microprocessor, microcontroller, programmable logic device or other suitable digital circuitry for executing the control algorithm. The load controller 9 may take the form of a simple sensor node that collects data relevant to the load side of the system. It does not necessarily require a microprocessor.

The controllers 5 and 9 can be computing devices and the systems and methods of this disclosure can be implemented in a computing system environment. Examples of well-known computing system environments and components thereof that may be suitable for use with the systems and methods include, but are not limited to, personal computers, server computers, hand-held or laptop devices, tablet devices, smart phones, multiprocessor systems, microprocessor-based systems, set top boxes, programmable consumer electronics, network PCs, minicomputers, mainframe computers, distributed computing environments that include any of the above systems or devices, and the like. Typical computing system environments and their operations and components are described in many existing patents (*e*.*g*., US Patent No. 7,191,467, owned by Microsoft Corp.).

The methods may be carried out via non-transitory computer-executable instructions, such as program modules. Generally, program modules include routines, programs, objects, components, data structures, and so forth, that perform particular tasks or implement particular types of data. The methods may also be practiced in distributed computing environments where tasks are performed by remote processing devices that are linked through a communications network. In a distributed computing environment, program modules may be located in both local and remote computer storage media including memory storage devices.

The processes and functions described herein can be non-transitorially stored in the form of software instructions in the computer. Components of the computer may include, but are not limited to, a computer processor, a computer storage medium serving as memory, and a system bus that couples various system components including the memory to the computer processor. The system bus can be of any of several types of bus structures including a memory bus or memory controller, a peripheral bus, and a local bus using any of a variety of bus architectures.

The computer typically includes one or more a variety of computer-readable media accessible by the processor and including both volatile and nonvolatile media and removable and non-removable media. By way of example, computer-readable media can comprise computer-storage media and communication media.

The computer storage media can store the software and data in a non-transitory state and includes both volatile and nonvolatile, removable and non-removable media implemented in any method or technology for storage of software and data, such as computer-readable instructions, data structures, program modules or other data. Computer-storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can accessed and executed by the processor.

The memory includes computer-storage media in the form of volatile and/or nonvolatile memory such as read only memory (ROM) and random access memory (RAM). A basic input/output system (BIOS), containing the basic routines that help to transfer information between elements within the computer, such as during start-up, is typically stored in the ROM. The RAM typically contains data and/or program modules that are immediately accessible to and/or presently being operated on by the processor.

The computer may also include other removable/non-removable, volatile/nonvolatile computer-storage media, such as (a) a hard disk drive that reads from or writes to non-removable, nonvolatile magnetic media; (b) a magnetic disk drive that reads from or writes to a removable, nonvolatile magnetic disk; and (c) an optical disk drive that reads from or writes to a removable, nonvolatile optical disk such as a CD ROM or other optical medium. The computer-storage medium can be coupled with the system bus by a communication interface, wherein the interface can include, e.g., electrically conductive wires and/or fiber-optic pathways for transmitting digital or optical signals between components. Other removable/non-removable, volatile/nonvolatile computer storage media that can be used in the exemplary operating environment include magnetic tape cassettes, flash memory cards, digital versatile disks, digital video tape, solid state RAM, solid state ROM, and the like.

The drives and their associated computer-storage media provide storage of computer-readable instructions, data structures, program modules and other data for the computer. For example, a hard disk drive inside or external to the computer can store an operating system, application programs, and program data.

The source and load controllers 5 and 9 can be used to meter energy transfer and communicate the information back to the user or to a remote location. For example, the disclosed methods and system can be implemented on a public charging station for electric vehicles and can be utilized to send electricity consumption data back to a central credit card processor. The transfer of information can be through an outside communication link 15, as depicted in FIG. 1. A user can also be credited for electricity that is transferred from his electric vehicle and sold to the power grid. The outside communication link 15 can also be used to transfer other operational information. For example, an electric vehicle can have contacts under its chassis that drop down to make connection to a charging plate embedded in a road surface. The communication link 15 can transfer proximity information indicating that the car is over the charging plate. The information can inhibit energizing the charger plate unless the car is properly positioned.

The source switching bridge 7 can be supplemented by the addition of an electromechanical relay or "contactor" providing a redundant method to disconnect the source 1 from the source terminals so as to provide a back-up in the case of a failure of the source switching bridge 7. The load disconnect device 13 can be supplemented by an electromechanical relay or contactor in the same fashion. The electromechanical contactor activation coils can be powered by what is known to those skilled in the art as a "watchdog circuit". The watchdog circuit continually communicates with the source or load controllers 5 and 9; otherwise, the contactor will automatically open, providing a fail-safe measure against "frozen" software or damaged circuitry in the controllers 5 and 9.

Referring to FIG. 3, one or both of switches 61 and 62 can be low-current, high-resistance switches or can include a current-limiting series-resistor. This is due to the fact that these switches are active only during the reverse-conducting state of the switching bridge 7, where minimum current is expected to flow under normal conditions. If a fault is experienced that does draw significant current, much of the source voltage will be dropped across the switch 61/62 or series-resistor. Thus, an indicator of fault current can be determined by simply measuring the voltage at point 34 of FIG. 1 and registering a fault if the voltage is more than a predetermined value less than the source voltage.

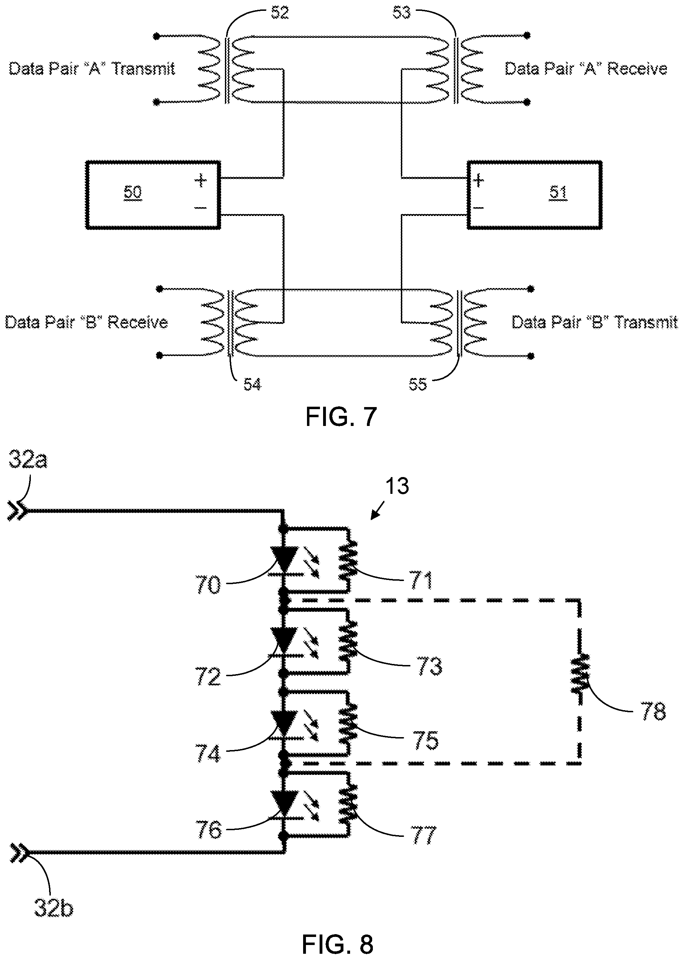

An alternative embodiment of a combined load and load disconnect device 13 is shown in FIG. 8. In this embodiment, a series string of uni-directional switching devices--in this case, light emitting diodes 70, 72, 74, and76--are combined in parallel with resistors 71, 73, 75, and 77. When the switching bridge 7 is in the forward-polarity state, current flows freely through the diodes 70, 72, 74, and76. When the switching bridge 7 is in the reverse-polarity state, electric current is blocked by the diodes70, 72, 74, and76; but a limited amount is allowed to flow in parallel resistors 71, 73, 75 and ,77. If there is a fault within the load disconnect device 13, represented by fault resistor (R_{fault}) 78, the parallel combination of R_{fault} 78 and resistors 71, 73, 75, and 77 will cause an increase in current during the time when the switching bridge 7 is in the reverse-polarity state. If the current exceeds a predetermined value, a fault is registered and the source controller 5 acts to place the switching bridge 7 into a non-conducting state to disconnect the source 1 from the source terminals 31a and 31b. Alternatively, a measurable decrease in current can indicate a damaged load disconnect device 13 and the source controller 5 would again register a fault and place the switching bridge 7 into a non-conducting state.

The data communication link 11 and/or external communication link 15 can be implemented using various methods and protocols well known to those skilled in the art. Communication hardware and protocols can include RS-232, RS-485, CAN bus, Firewire and others. The communication link 11 can be established using copper conductors, fiber optics or wirelessly over any area of the electromagnetic spectrum allowed by regulators, such as the Federal Communications Commission (FCC), as set forth in Part 18 of the FCC rules--for example, the 2.4 GHz, 3.6 GHz, 4.9 GHz, 5 GHz, and 5.9 GHz frequencies allocated for WiFi or the 915Mhz frequency allocated for ZigBee. Wireless communication can be established using any of a number of protocols well known to those skilled in the art, including Wi-Fi, ZigBee, IRDa, Wi-Max and others. The data communication link 11 and/or external communication link 15 of FIG. 1 can be what is referred to by those skilled in the art as "communication over power lines", or "communication or power line carrier" (PLC), also known as "power line digital subscriber line" (PDSL), "mains communication", or "broadband over power lines" (BPL). Referring to the revised source controller of FIG. 6, communication signals generated by a microprocessor 20 are superimposed on the source terminals 31a and 31b using a modulator/demodulator 48. The hardware and software methods of the modulator/demodulator 48 are well known to those skilled in the art. Although the source controller 5 is used as an example, an identical implementation of the modulator/demodulator 48 can be contained in the load controller 9, allowing bidirectional communication between the source and load controllers 5 and 9. The transmitting side, either the source 1 or load 3, combines the communication signals with the power waveform on the source or load terminals 31a and 31b or 32a and 32b. The receiving side, either the source 1 or the load 3, would then separate the communication signals from the power waveform.

To allow simultaneous power transfer and user-data communications, the system can be configured as depicted in FIG. 7. In one example, a CAT 5 communication cable is used to transfer ethernet data between an end-user's computer and an ethernet switch; and the same cable conductors can be used to provide 400-600 Watts of power to the computer, itself, using the methods described herein. Referring to FIG. 7, the source circuitry 50 can include all of the source components; or, referring to FIG. 1, the source circuitry 50 can include the source 1, the source controller 5, the switching bridge 7, and all related source components. The load circuitry 51, shown in FIG. 7, can represent all of the load components; or, referring to FIG. 1, the load circuitry 51 can include the load 3, the load controller 9, the load disconnect device 13, and all related load components. The output conductors of the source circuitry 50 are applied to the center tap points of isolation transformers 52 and 54 on the source side of the configuration. Corresponding center tap points on isolation transformers 53 and 55 are on the load side of the configuration and are electrically connected to center points on transformers 52 and 54 through the transformer windings. On the source side, ethernet data can be applied to the windings of transformers 52 and 54 that are electrically isolated from the center-tapped side using a balanced conductor pair configuration that is well known to those in the industry. On the load side, the pairs are picked up on the corresponding windings of the transformers 53 and 55 that are electrically isolated from the center-tapped side containing the power. Because the power is essentially direct current, it passes through the transformers 52 and 54 on the source side to the load side without causing magnetic excitation and, therefore, does not corrupt the data that is also resident on the communication lines. The described hardware configuration of center-tapped transformers is commonly used in the industry for implementing power over ethernet (PoE) as is described in PoE standard IEEE-802.3a. PoE does not have the safety features, described herein, and is therefore limited to approximately 48V to avoid the possibility of electrical shock.

## Claims

1. A power distribution system for regulating transfer of energy from a source (1) on a source side and including source terminals (31a, 31b) to a load (3) on a load side and including load terminals (32a, 32b), the system comprising:
a) a source controller (5) on the source side of the power distribution system in communication with and responsive to a source sensor (8) that provides feedback to the source controller (5) that includes at least a signal indicative of electric current through the source terminals (31a, 31b);
b) a source switching bridge (7) electrically coupled with the source controller (5) and responsive to control signals (40) from the source controller (5) for electrically disconnecting the source (1) from the source terminals (31a, 31b) and for applying a source voltage in either a forward-polarity or reverse-polarity state relative to the source terminals (31a, 31b);
c) a load disconnect device (13) configured to electrically decouple the load (3) from the load terminals (32a, 32b); and
d) a logic device implemented in at least the source controller (5) and configured to place the source switching bridge (7) into a reverse-polarity state and configured to perform at least one current measurement on the current passing through the source terminals (31a, 31b) when the source switching bridge (7) is in the reverse-polarity state, wherein a current measurement outside of predetermined high or low limits indicates that there is a foreign object or living organism making contact with the source or load terminals (32a, 32b) or a failure in the power distribution system, and configured to electrically disconnect the source (1) from the source terminals (31a, 31b) if the current measurement falls outside the predetermined high and low limits.

2. The power distribution system of claim 1, further comprising a load controller (9) on the load side of the power distribution system in communication with and responsive to a load sensor that provides feedback to the load controller (9), wherein the feedback includes at least a signal (41) indicative of a voltage across the load terminals (32a, 32b).

3. The power distribution system of claim 2, further comprising a data communication link (11) configured for exchange of operating information between the source controller (5) and the load controller (9), wherein the operating information includes at least a value indicative of the voltage across the load terminals (32a, 32b) that is acquired by the load controller (9).

4. The power distribution system of claim 3, wherein the data communication link (11) comprises wireless communication circuits configured for operation at carrier frequencies within an electromagnetic spectrum allowed by federal regulators.

5. The power distribution system of claim 3, wherein the source and load controllers (5, 9) each include a modem configured to exchange the operation information and operable to combine a communication signal with voltage waveforms present on the source or load terminals (31a, 31b, 32a, 32b) and to later separate the communication signal from the voltage waveforms present on the source or load terminals (31a, 31b, 32a, 32b), such that the source and load controllers (5, 9) can communicate with each other using only connections between the source and load terminals (31a, 31b, 32a, 32b).

6. The power distribution system of claim 5, wherein the source and load controllers (5, 9) are configured to initiate exchange of operating information only when the source (1) is disconnected from the source terminals (31a, 31b) so as to interrupt, when operating information is exchanged, current flow from the source terminals (31a, 31b) to the load terminals (32a, 32b) and associated electrical noise generated by the current.

7. The power distribution system of claim 3, wherein the source and load controllers (5, 9) each include a processor 20 in communication with a computer-readable medium non-transitonally storing software code for exchanging a digital verification code that must match a predetermined value before energy transfer can be initiated and a communication driver configured to exchange the digital verification code.

8. The power distribution system of claim 2, wherein the switching bridge (7) is configured to electrically decouple the source (1) from the source terminals (31a, 31b), wherein the source controller (5) is configured to calculate a difference between a source terminal voltage acquired by the source controller (5) and the load terminal voltage acquired by the load controller (9) and to issue a command to open the switching bridge (7) if the difference does not fall between predetermined high and low values.

9. The power distribution system of claim 1, wherein the switching bridge (7) is configured to electrically decouple the source (1) from the source terminals (31a, 31b), wherein the switching bridge (7) is configured to respond to a control signal (40) from the source controller (5) to vary the ratio of time that the source (1) is connected to the source terminals (31a, 31b) in relationship to the time the source (1) is disconnected from the source terminals (31a, 31b) so as to regulate the average energy transferred from the source (1) to the load (3).

10. The power distribution system of claim 1, further comprising a voltage sensor that allows the source controller (5) to acquire a signal indicative of the electrical voltage at the source terminals (31a, 31b), wherein the source controller (5) is configured to disconnect the source (1) from the source terminals (31a, 31b) if the electrical voltage is outside of predetermined high or low limits.

11. The power distribution system of claim 10, wherein the source controller (5) is configured to periodically multiply source terminal voltage measurements with the source current measurements resulting in a calculated instantaneous power value and to integrate consecutive power values to derive a total energy value.

12. The power distribution system of claim 11, wherein the source controller (5) is also configured to apply a financial charge to a user for energy extracted from the source (1).

13. The power distribution system of claim 1, wherein the load disconnect device (13) comprises a diode (39).

14. The power distribution system of claim 1, wherein the load (3) and load disconnect device (13) comprises a series string of uni-directional current conducting devices (70, 72, 74, 76) with parallel connected resistors (71,73, 75, 77), wherein the uni-directional devices (70, 72, 74, 76) are configured to allow current flow when the source switching bridge (7) is in the forward-polarity state and where the resistors (71,73, 75, 77) allow a limited amount of current to flow around the uni-directional devices (70, 72, 74, 76) when the source switching bridge (7) is in the reverse conducting state, and where the source controller (5) is configured to measure the current flow during the reverse-polarity state and will disconnect the source (1) from the source terminals (31a, 31b) if the current measurement is outside of predetermined high or low limits.

15. A method for implementing a power distribution system according to claim 1 for a transfer of energy from a source (1) to a load (3), where the power distribution system is configured to detect unsafe conditions that include electrically conducting foreign objects or individuals that have come in contact with exposed conductors in the power distribution system, the method comprising the steps of:
a) generating a responsive signal (40) in a source controller (5) including source terminals (31a, 31b), the responsive signal (40) reversing a voltage on the source terminals (31a, 31b);
b) with the voltage on the source terminals (31a, 31b) reversed, acquiring a measurement of electrical current flowing through the source terminals (31a, 31b); and
c) generating signals (40) from the source controller (5) to electrically disconnect the source (1) from the source terminals (31a, 31b) if and when the electrical current falls outside of high or low limits indicating that there is a conducting foreign object or living organism making electrical contact with the source or load terminals (31a, 31b, 32a, 32b) or a failure in power distribution system hardware.

16. The method of claim 15, wherein the source controller (5) communicates with a load controller (9) using at least one of an optical, conductive and wireless communication link (11).

17. The method of claim 15, wherein the source controller (5) acquires a digital verification code from a load controller (9) via a communication link (11) and acts to cause the source (1) to electrically disconnect from the source terminals (31a, 31b) if the digital verification code does not match a previously stored code resident in memory of the source controller (5).

18. The method of claim 15, wherein the power distribution system includes a source switching bridge (7) electrically coupled with the source controller (5) and responsive to control signals (40) from the source controller (5) to electrically disconnect the source (1) from the source terminals, wherein the source controller (5) acts to vary a forward-polarity time period of the source switching bridge (7) in relation to the time where the source switching bridge (7) is in a reverse-polarity state or where the source (1) is disconnected from the source terminals (31a, 31b) such that the average energy transferred from the source (1) to the load (3) can be regulated according to an algorithm being executed by the source controller (5).

19. The method of claim 15, further comprising:
1) executing code in the source controller (5) to acquire a measurement of the electrical current flowing through the source terminals (31a, 31b) using a current sensor (8);
g) storing the electrical current value in a computer-readable storage device in the source controller (5); and
h) opening a source switching bridge (7) to disconnect the source (1) from the source terminals (31a, 31b) if and when the electrical current exceeds a predetermined maximum value.

20. The method of claim 15, further comprising executing an algorithm in the source controller (5) to calculate a difference between the source terminal voltage acquired by the source controller (5) using a source terminal voltage sensor and a load terminal voltage acquired by the source controller (5) from a load controller (9) and opening a source switching bridge (7) to disconnect the source (1) from the source terminals (31a, 31b) if and when the difference between the source terminal voltage and the load terminal voltage does not fall between predetermined high and low limits.

21. The method of claim 15, further comprising, at the source controller (5):
1) acquiring a measurement of the electrical current flowing through the source terminals (31a, 31b) using a current sensor (8);
g) acquiring a measurement of the source terminal voltage using a voltage sensor;
h) periodically multiplying the source terminal voltage measurements by the source current measurements to derive an instantaneous power value; and
i) integrating consecutive calculated power values with respect to time to derive a total energy value.

22. The method of claim 21, further comprising applying a financial charge to a user of the energy for energy extracted by the user from the source (1).

23. The method of claim 15, wherein the source controller (5) acquires a first measurement of the source terminal voltage using a voltage sensor while the source switching bridge (7) is in a forward-polarity state and a second measurement of the source terminal voltage immediately after the source switching bridge (7) electrically disconnects the source (1) from the source terminals (31a, 31b), and computes a difference between the first and second source terminal voltage measurements, and where the source controller (5) takes action to electrically disconnect the source (1) from the source terminals (31a, 31b) if the source terminal voltage difference falls outside of predetermined high or low limits.

24. The method of claim 23, wherein the source controller (5) also acquires a measurement of the electrical current flowing through the source terminals (31a, 31b) using a current sensor (8) while the source switching bridge (7) is in the forward-polarity state and divides the source terminal voltage difference by the electrical current measurement to derive a value for a resistance of the conductors between the source terminals (31a, 31b) and the load terminals (32a, 32b), and where the source controller (5) takes action to disconnect the source (1) if the resistance value falls outside of predetermined high and low limits.

25. The method of claim 15, further comprising connecting a first source circuitry (50) output conductor to a center tap point on a secondary coil of a first isolation transformer and connecting a second source circuitry (50) output conductor to a center tap point on a secondary coil of a second isolation transformer, where a first load circuitry (51) input conductor is connected to a center tap point on a primary coil of a third isolation transformer and a second load circuitry (51) input conductor is connected to a center tap point of a primary coil on a fourth isolation transformer, such that the configuration substantially cancels any flux produced in the four transformers due to current flowing from the source circuitry (50) to the load circuitry (51), and where the remaining unused terminals of the four transformers can be used to transmit and receive data that is electrically isolated and independent of electrical current flowing from the source circuitry (50) to the load circuitry (51).

26. The method of claim 25, wherein the data is communicated using Ethernet technology.

27. The method of claim 25, wherein the data is communicated using digital subscriber line technology.

## Patentansprüche

1. Leistungsverteilungssystem zum Regeln des Transfers von Energie von einer Quelle (1) auf einer Quellenseite und mit Quellenanschlüssen (31a, 31b) zu einer Last (3) auf einer Lastseite und mit Lastanschlüssen (32a, 32b), wobei das System umfasst:
a) einen Quellencontroller (5) auf der Quellenseite des Leistungsverteilungssystems in Kommunikation mit einem und reagierend auf einen Quellensensor (8), der eine Rückkopplung an den Quellencontroller (5) liefert, die mindestens ein Signal enthält, das elektrischen Strom durch die Quellenanschlüsse (31a, 31b) anzeigt;
b) eine Quellenschaltbrücke (7) elektrisch gekoppelt mit dem Quellencontroller (5) und reagierend auf Steuersignale (40) von dem Quellencontroller (5) zum elektrischen Trennen der Quelle (1) von den Quellenanschlüssen (31a, 31b) und zum Anlegen einer Quellenspannung entweder in einem Vorwärtspolaritäts- oder Rückwärtspolaritätszustand relativ zu den Quellenanschlüssen (31a, 31b);
c) eine Lasttrenneinrichtung (13) ausgelegt zum elektrischen Entkoppeln der Last (3) von den Lastanschlüssen (32a, 32b); und
d) eine Logikeinrichtung implementiert in mindestens dem Quellencontroller (5) und ausgelegt zum Versetzen der Quellenschaltbrücke (7) in einen Rückwärtspolaritätszustand und ausgelegt zum Durchführen mindestens einer Strommessung an dem durch die Quellenanschlüsse (31a, 31b) fließenden Strom, wenn sich die Quellenschaltbrücke (7) in dem Rückwärtspolaritätszustand befindet, wobei eine Strommessung außerhalb einer vorbestimmten hohen oder niedrigen Grenze anzeigt, dass ein Fremdobjekt oder ein lebender Organismus, der mit der Quelle oder Lastanschlüssen (32a, 32b) Kontakt macht, oder ein Ausfall in dem Leistungsverteilungssystem vorliegt, und ausgelegt zum elektrischen Trennen der Quelle (1) von den Quellenanschlüssen (31a, 31b), falls die Strommessung außerhalb der vorbestimmten hohen und niedrigen Grenze fällt.

2. Leistungsverteilungssystem nach Anspruch 1, weiter umfassend einen Lastcontroller (9) auf der Lastseite des Leistungsverteilungssystems in Kommunikation mit einem und reagierend auf einen Lastsensor, der Rückkopplung an den Lastcontroller (9) liefert, wobei die Rückkopplung mindestens ein Signal (41) enthält, das eine Spannung an den Lastanschlüssen (32a, 32b) anzeigt.

3. Leistungsverteilungssystem nach Anspruch 2, weiter umfassend eine Datenkommunikationsstrecke (11) ausgelegt zum Austausch von Betriebsinformationen zwischen dem Quellencontroller (5) und dem Lastcontroller (9), wobei die Betriebsinformationen mindestens einen Wert enthalten, der die Spannung an den Lastanschlüssen (32a, 32b) anzeigt, die durch den Lastcontroller (9) erfasst wird.

4. Leistungsverteilungssystem nach Anspruch 3, wobei die Datenkommunikationsstrecke (11) Drahtloskommunikationsschaltungen umfasst, die ausgelegt sind zum Betrieb bei Trägerfrequenzen innerhalb eines durch Bundesregulierungsbehörden zugelassenen elektromagnetischen Spektrums.

5. Leistungsverteilungssystem nach Anspruch 3, wobei der Quellen- und Lastcontroller (5, 9) jeweils ein Modem enthalten, das ausgelegt ist zum Austauschen der Betriebsinformationen und betätigbar ist zum Kombinieren eines Kommunikationssignals mit an den Quellen- oder Lastanschlüssen (31a, 31b, 32a, 32b) vorliegenden Spannungswellenformen und zum späteren Trennen des Kommunikationssignals von den an den Quellen- oder Lastanschlüssen (31a, 31b, 32a, 32b) vorliegenden Spannungswellenformen, so dass der Quellen- und Lastcontroller (5, 9) miteinander nur unter Verwendung von Verbindungen zwischen den Source- und Lastanschlüssen (31a, 31b, 32a, 32b) kommunizieren können.

6. Leistungsverteilungssystem nach Anspruch 5, wobei der Quellen- und Lastcontroller (5, 9) ausgelegt sind zum Initiieren eines Austauschs von Betriebsinformationen nur dann, wenn die Quelle (1) von den Quellenanschlüssen (31a, 31b) getrennt ist, um, wenn Betriebsinformationen ausgetauscht werden, einen Stromfluss von den Quellenanschlüssen (31a, 31b) zu den Lastanschlüssen (32a, 32b) und ein durch den Strom erzeugtes assoziiertes elektrisches Rauschen zu unterbrechen.

7. Leistungsverteilungssystem nach Anspruch 3, wobei der Quellen- und Lastcontroller (5, 9) jeweils einen Prozessor (20) in Kommunikation mit einem computerlesbaren Medium, das nicht vorübergehend einen Softwarecode zum Erzeugen eines digitalen Verifikationscodes speichert, der mit einem vorbestimmten Wert übereinstimmen muss, bevor ein Energietransfer initiiert werden kann, und einen Kommunikationstreiber, der ausgelegt ist zum Austauschen des digitalen Verifikationscodes, enthalten.

8. Leistungsverteilungssystem nach Anspruch 2, wobei die Schaltbrücke (7) ausgelegt ist zum elektrischen Entkoppeln der Quelle (1) von den Quellenanschlüssen (31a, 31b), wobei der Quellencontroller (5) ausgelegt ist zum Berechnen einer Differenz zwischen einer durch den Quellencontroller (5) erfassten Quellenanschlussspannung und der durch den Lastcontroller (9) erfassten Lastanschlussspannung und zum Ausgeben eines Befehls zum Öffnen der Schaltbrücke (7), falls die Differenz nicht zwischen einen vorbestimmten hohen und niedrigen Wert fällt.

9. Leistungsverteilungssystem nach Anspruch 1, wobei die Schaltbrücke (7) ausgelegt ist zum elektrischen Entkoppeln der Quelle (1) von den Quellenanschlüssen (31a, 31b), wobei die Schaltbrücke (7) ausgelegt ist zum Antworten auf ein Steuersignal (40) von dem Quellencontroller (5) zum Variieren des Verhältnisses der Zeit, während der die Quelle (1) mit den Quellenanschlüssen (31a, 31b) verbunden ist, bezüglich der Zeit, während der die Quelle (1) von den Quellenanschlüssen (31a, 31b) getrennt ist, um die von der Quelle (1) zu der Last (3) transferierte mittlere Energie zu regeln.

10. Leistungsverteilungssystem nach Anspruch 1, weiter umfassend einen Spannungssensor, der gestattet, dass der Quellencontroller (5) ein Signal erfasst, dass die elektrische Spannung an den Quellenanschlüssen (31a, 31b) anzeigt, wobei der Quellencontroller (5) ausgelegt ist zum Trennen der Quelle (1) von den Quellenanschlüssen (31a, 31b), falls die elektrische Spannung außerhalb einer vorbestimmten hohen oder niedrigen Grenze liegt.

11. Leistungsverteilungssystem nach Anspruch 10, wobei der Quellencontroller (5) ausgelegt ist zum periodischen Multiplizieren von Quellenanschlussspannungsmessungen mit den Quellenstrommessungen, was zu einem berechneten Istleistungswert führt, und zum Integrieren aufeinanderfolgender Leistungswerte, um einen Gesamtenergiewert abzuleiten.

12. Leistungsverteilungssystem nach Anspruch 11, wobei der Quellencontroller (5) auch ausgelegt ist zum Anwenden einer finanziellen Gebühr auf einen Benutzer für von der Quelle (1) extrahierte Energie.

13. Leistungsverteilungssystem nach Anspruch 1, wobei die Lasttrenneinrichtung (13) eine Diode (39) umfasst.

14. Leistungsverteilungssystem nach Anspruch 1, wobei die Last (3) und die Lasttrenneinrichtung (13) eine Reihenkette aus unidirektionalen stromleitenden Einrichtungen (70, 72, 74, 76) mit parallel geschalteten Widerständen (71, 73, 75, 77) umfasst, wobei die unidirektionalen Einrichtungen (70, 72, 74, 76) ausgelegt sind, einen Stromfluss zu gestatten, wenn die Quellenschaltbrücke (7) sich in dem Vorwärtspolaritätszustand befindet, und wobei die Widerstände (71, 73, 75, 77) das Fließen einer begrenzten Strommenge um die unidirektionalen Einrichtungen (70, 72, 74, 76) gestatten, wenn sich die Quellenschaltbrücke (7) in einem rückwärtsleitenden Zustand befindet, und wobei der Quellencontroller (5) ausgelegt ist zum Messen des Stromflusses während des Rückwärtspolaritätszustands und die Quelle (1) von den Quellenanschlüssen (31a, 31b) trennen wird, falls die Strommessung außerhalb einer vorbestimmten hohen oder niedrigen Grenze liegt.

15. Verfahren zum Implementieren eines Leistungsverteilungssystems nach Anspruch 1 für einen Transfer von Energie von einer Quelle (1) zu einer Last (3), wobei das Leistungsverteilungssystem ausgelegt ist zum Detektieren von unsicheren Zuständen, die elektrisch leitende Fremdkörper oder Individuen beinhalten, die in Kontakt mit exponierten Leitern in dem Leistungsverteilungssystem gekommen sind, wobei das Verfahren die Schritte umfasst:
a) Erzeugen eines Antwortsignals (40) in einem Quellencontroller (5) mit Quellenanschlüssen (31a, 31b), wobei das Antwortsignal (40) eine Spannung an den Quellenanschlüssen (31a, 31b) umkehrt;
b) bei der an den Quellenanschlüssen (31a, 31b) umgekehrten Spannung, Erfassen einer Messung von durch die Quellenanschlüsse (31a, 31b) fließendem elektrischem Strom; und
c) Erzeugen von Signalen (40) von dem Quellencontroller (5) zum elektrischen Trennen der Quelle (1) von den Quellenanschlüssen (31a, 31b), nur wenn der elektrische Strom außerhalb einer hohen oder niedrigen Grenze fällt, was anzeigt, dass ein leitender Fremdkörper oder ein lebender Organismus, der einen elektrischen Kontakt mit den Quellen- oder Lastanschlüssen (31a, 31b, 32a, 32b) herstellt, oder ein Ausfall in einer Leistungsverteilungssystemhardware vorliegt.

16. Verfahren nach Anspruch 15, wobei der Quellencontroller (5) mit einem Lastcontroller (9) unter Verwendung mindestens einer optischen, leitfähigen und drahtlosen Kommunikationsstrecke (11) kommuniziert.

17. Verfahren nach Anspruch 15, wobei der Quellencontroller (5) einen digitalen Verifikationscode von einem Lastcontroller (9) über eine Kommunikationsstrecke (11) erfasst und dahingehend wirkt, zu bewirken, dass die Quelle (1) elektrisch von den Quellenanschlüssen (31a, 31b) trennt, falls der digitale Verifikationscode nicht mit einem zuvor gespeicherten Code übereinstimmt, der sich in einem Speicher des Quellencontrollers (5) befindet.

18. Verfahren nach Anspruch 15, wobei das Leistungsverteilungssystem eine Quellenschaltbrücke (7) enthält, elektrisch gekoppelt mit dem Quellencontroller (5) und reagierend auf Steuersignale (40) von dem Quellencontroller (5) zum elektrischen Trennen der Quelle (1) von den Quellenanschlüssen, wobei der Quellencontroller (5) dahingehend wirkt, eine Vorwärtspolaritätszeitperiode der Quellenschaltbrücke (7) in Relation zu der Zeit zu variieren, wo sich die Quellenschaltbrücke (7) in einem Rückwärtspolaritätszustand befindet oder wo die Quelle (1) von den Quellenanschlüssen (31a, 31b) getrennt ist, so dass die von der Quelle (1) zu der Last (3) transferierte mittlere Energie gemäß einem durch den Quellencontroller (5) ausgeführten Algorithmus geregelt werden kann.

19. Verfahren nach Anspruch 15, weiter umfassend:
f) Ausführen von Code in dem Quellencontroller (5) zum Erfassen einer Messung des durch die Quellenanschlüsse (31a, 31b) fließenden elektrischen Stroms unter Verwendung eines Stromsensors (8);
g) Speichern des elektrischen Stromwerts in einer computerlesbaren Ablageeinrichtung in dem Quellencontroller (5); und
h) Öffnen einer Quellenschaltbrücke (7) zum Trennen der Quelle (1) von den Quellenanschlüssen (31a, 31b), nur wenn der elektrische Strom einen vorbestimmten Maximalwert übersteigt.

20. Verfahren nach Anspruch 15, weiter umfassend das Ausführen eines Algorithmus in dem Quellencontroller (5) zum Berechnen einer Differenz zwischen der durch den Quellencontroller (5) unter Verwendung eines Quellenanschlussspannungssensors erfassten Quellenanschlussspannung und einer durch den Quellencontroller (5) von einem Lastcontroller (9) erfassten Lastanschlussspannung und Öffnen einer Quellenschaltbrücke (7) zum Trennen der Quelle (1) von den Quellenanschlüssen (31a, 31b), nur wenn die Differenz zwischen der Quellenanschlussspannung und der Lastanschlussspannung nicht zwischen die vorbestimmte hohe und niedrige Grenze fällt.

21. Verfahren nach Anspruch 15, weiter umfassend, an dem Quellencontroller (5):
f) Erfassen einer Messung des durch die Quellenanschlüsse (31a, 31b) fließenden elektrischen Stroms unter Verwendung eines Stromsensors (8);
g) Erfassen einer Messung der Quellenanschlussspannung unter Verwendung eines Spannungssensors;
h) periodisches Multiplizieren der Quellenanschlussspannungsmessungen mit den Quellenstrommessungen, um einen Istleistungswert abzuleiten; und
i) Integrieren aufeinanderfolgender berechneter Leistungswerte bezüglich Zeit, um einen Gesamtenergiewert abzuleiten.

22. Verfahren nach Anspruch 21, weiter umfassend das Anwenden einer finanziellen Gebühr auf einen Nutzer der Energie für durch den Nutzer von der Quelle (1) extrahierte Energie.

23. Verfahren nach Anspruch 15, wobei der Quellencontroller (5) eine erste Messung der Quellenanschlussspannung unter Verwendung eines Spannungssensors, während die Quellenschaltbrücke (7) sich in einem Vorwärtspolaritätszustand befindet, und eine zweite Messung der Quellenanschlussspannung unmittelbar, nachdem die Quellenschaltbrücke (7) die Quelle (1) elektrisch von den Quellenanschlüssen (31a, 31b) trennt, erfasst und eine Differenz zwischen der ersten und zweiten Quellenanschlussspannungsmessung berechnet, und wobei der Quellencontroller (5) eine Handlung ergreift zum elektrischen Trennen der Quelle (1) von den Quellenanschlüssen (31a, 31b), falls die Quellenanschlussspannungsdifferenz außerhalb einer vorbestimmten hohen oder niedrigen Grenze fällt.

24. Verfahren nach Anspruch 23, wobei der Quellencontroller (5) auch eine Messung des durch die Quellenanschlüsse (31a, 31b) fließenden elektrischen Stroms unter Verwendung eines Stromsensors (8) erfasst, während sich die Quellenschaltbrücke (7) in dem Vorwärtspolaritätszustand befindet, und die Quellenanschlussspannungsdifferenz durch die elektrische Strommessung dividiert, um einen Wert für einen Widerstandswert der Leiter zwischen den Quellenanschlüssen (31a, 31b) und den Lastanschlüssen (32a, 32b) abzuleiten, und wobei der Quellencontroller (5) eine Handlung unternimmt zum Trennen der Quelle (1), falls der Widerstandswert außerhalb einer vorbestimmten hohen und niedrigen Grenze fällt.

25. Verfahren nach Anspruch 15, weiter umfassend das Verbinden eines ersten Quellenschaltungsanordnungs- (50) Ausgangsleiters mit einem Mittenabgriffspunkt an einer Sekundärspule eines ersten Trenntransformators und Verbinden eines zweiten Quellenschaltungsanordnungs-(50) Ausgangsleiters mit einem Mittenabgriffspunkt an einer Sekundärspule eines zweiten Trenntransformators, wobei ein erster Lastschaltungsanordnungs- (51) Eingangsleiter mit einem Mittenabgriffspunkt an einer Primärspule eines dritten Trenntransformators verbunden ist und ein zweiter Lastschaltungsanordnungs- (51) Eingangsleiter mit einem Mittenabgriffspunkt einer Primärspule an einem vierten Trenntransformator verbunden wird, so dass die Konfiguration einen in den vier Transformatoren aufgrund eines von der Quellenschaltungsanordnung (50) zu der Lastschaltungsanordnung (51) fließenden Stroms erzeugten Fluss im Wesentlichen aufhebt, und wobei die verbleibenden ungenutzten Anschlüsse der vier Transformatoren zum Übertragen und Empfangen von Daten verwendet werden können, die elektrisch isoliert sind und unabhängig eines von der Quellenschaltungsanordnung (50) zu der Lastschaltungsanordnung (51) fließenden elektrischen Stroms.

26. Verfahren nach Anspruch 25, wobei die Daten unter Verwendung von Ethernet-Technologie kommuniziert werden.

27. Verfahren nach Anspruch 25, wobei die Daten unter Verwendung einer Technologie der digitalen Teilnehmerleitung kommuniziert werden.

## Revendications

1. Système de distribution d'alimentation permettant de réguler un transfert d'énergie depuis une source (1) d'un côté source et comportant des bornes de source (31a, 31b) jusqu'à une charge (3) d'un côté charge et comportant des bornes de charge (32a, 32b), le système comprenant :
a) un contrôleur de source (5) du côté source du système de distribution d'alimentation en communication avec, et réagissant à, un capteur de source (8) qui fournit un retour d'information au contrôleur de source (5), comportant au moins un signal indiquant un courant électrique traversant les bornes de source (31a, 31b) ;
b) un pont de commutation de source (7) couplé électriquement au contrôleur de source (5) et réagissant à des signaux de commande (40) provenant du contrôleur de source (5) pour déconnecter électriquement la source (1) des bornes de source (31a, 31b) et pour appliquer une tension de source dans un état soit de polarité directe, soit de polarité inverse par rapport aux bornes de source (31a, 31b) ;
c) un dispositif de déconnexion de charge (13) configuré pour découpler électriquement la charge (3) des bornes de charge (32a, 32b) ; et
d) un dispositif logique mis en œuvre dans au moins le contrôleur de source (5) et configuré pour mettre le pont de commutation de source (7) dans un état de polarité inverse et configuré pour réaliser au moins une mesure de courant sur le courant traversant les bornes de source (31a, 31b) lorsque le pont de commutation de source (7) se trouve dans l'état de polarité inverse, une mesure de courant sortant de limites haute ou basse prédéterminées indiquant l'entrée en contact d'un corps étranger ou d'un organisme vivant avec les bornes de source ou de charge (32a, 32b) ou une défaillance dans le système de distribution d'alimentation, et configuré pour déconnecter électriquement la source (1) des bornes de source (31a, 31b) si la mesure de courant sort des limites haute et basse prédéterminées.

2. Système de distribution d'alimentation selon la revendication 1, comprenant en outre un contrôleur de charge (9) du côté charge du système de distribution d'alimentation en communication avec, et réagissant à, un capteur de charge qui fournit un retour d'information au contrôleur de charge (9), le retour d'information comportant au moins un signal (41) indiquant une tension aux bornes de charge (32a, 32b).

3. Système de distribution d'alimentation selon la revendication 2, comprenant en outre une liaison de communication de données (11) configurée pour échanger des informations de fonctionnement entre le contrôleur de source (5) et le contrôleur de charge (9), les informations de fonctionnement comportant au moins une valeur indiquant la tension aux bornes de charge (32a, 32b) qui est acquise par le contrôleur de charge (9).

4. Système de distribution d'alimentation selon la revendication 3, dans lequel la liaison de communication de données (11) comprend des circuits de communication sans fil configurés pour fonctionner à des fréquences porteuses comprises dans un spectre électromagnétique autorisé par des organismes de réglementation fédéraux.

5. Système de distribution d'alimentation selon la revendication 3, dans lequel les contrôleurs de source et de charge (5, 9) comportent chacun un modem configuré pour échanger les informations de fonctionnement et utilisable pour combiner un signal de communication avec des formes d'onde de tension présentes sur les bornes de source ou de charge (31a, 31b, 32a, 32b) et pour séparer ultérieurement le signal de communication des formes d'onde de tension présentes sur les bornes de source ou de charge (31a, 31b, 32a, 32b), de façon à permettre aux contrôleurs de source et de charge (5, 9) de communiquer entre eux au moyen uniquement de connexions entre les bornes de source et de charge (31a, 31b, 32a, 32b).

6. Système de distribution d'alimentation selon la revendication 5, dans lequel les contrôleurs de source et de charge (5, 9) sont configurés pour lancer l'échange d'informations de fonctionnement uniquement lorsque la source (1) est déconnectée des bornes de source (31a, 31b) de manière à interrompre, lors de l'échange d'informations de fonctionnement, la circulation de courant depuis les bornes de source (31a, 31b) vers les bornes de charge (32a, 32b) et un bruit électrique associé généré par le courant.

7. Système de distribution d'alimentation selon la revendication 3, dans lequel les contrôleurs de source et de charge (5, 9) comportent chacun un processeur (20) en communication avec un support lisible par ordinateur stockant de manière non transitoire un code de logiciel pour échanger un code de vérification numérique qui doit être conforme à une valeur prédéterminée avant que le transfert d'énergie puisse être lancé, et un pilote de communication configuré pour échanger le code de vérification numérique.

8. Système de distribution d'alimentation selon la revendication 2, dans lequel le pont de commutation (7) est configuré pour découpler électriquement la source (1) des bornes de source (31a, 31b), le contrôleur de source (5) étant configuré pour calculer une différence entre une tension aux bornes de source acquise par le contrôleur de source (5) et la tension aux bornes de charge acquise par le contrôleur de charge (9) et pour émettre une commande d'ouverture du pont de commutation (7) si la différence ne s'inscrit pas entre des valeurs haute et basse prédéterminées.

9. Système de distribution d'alimentation selon la revendication 1, dans lequel le pont de commutation (7) est configuré pour découpler électriquement la source (1) des bornes de source (31a, 31b), le pont de commutation (7) étant configuré pour, en réaction à un signal de commande (40) provenant du contrôleur de source (5), faire varier le rapport de la durée de connexion de la source (1) aux bornes de source (31a, 31b) sur la durée de déconnexion de la source (1) des bornes de source (31a, 31b) de manière à réguler l'énergie moyenne transférée depuis la source (1) jusqu'à la charge (3).

10. Système de distribution d'alimentation selon la revendication 1, comprenant en outre un capteur de tension qui permet au contrôleur de source (5) d'acquérir un signal indiquant la tension électrique aux bornes de source (31a, 31b), le contrôleur de source (5) étant configuré pour déconnecter la source (1) des bornes de source (31a, 31b) si la tension électrique sort de limites haute ou basse prédéterminées.

11. Système de distribution d'alimentation selon la revendication 10, dans lequel le contrôleur de source (5) est configuré pour multiplier périodiquement des mesures de tension aux bornes de source par les mesures de courant de source afin de produire une valeur de puissance instantanée calculée et pour intégrer des valeurs de puissance consécutives afin d'en déduire une valeur d'énergie totale.

12. Système de distribution d'alimentation selon la revendication 11, dans lequel le contrôleur de source (5) est également configuré pour appliquer une imputation financière à un utilisateur pour l'énergie extraite de la source (1).

13. Système de distribution d'alimentation selon la revendication 1, dans lequel le dispositif de déconnexion de charge (13) comprend une diode (39).

14. Système de distribution d'alimentation selon la revendication 1, dans lequel la charge (3) et le dispositif de déconnexion de charge (13) comprennent une chaîne en série de dispositifs conducteurs de courant unidirectionnels (70, 72, 74, 76) avec des résistances connectés en parallèle (71, 73, 75, 77), les dispositifs unidirectionnels (70, 72, 74, 76) étant configurés pour permettre la circulation de courant lorsque le pont de commutation de source (7) se trouve dans l'état de polarité directe, et les résistances (71, 73, 75, 77) permettant la circulation d'une quantité limitée de courant autour des dispositifs unidirectionnels (70, 72, 74, 76) lorsque le pont de commutation de source (7) se trouve dans l'état de polarité inverse, et le contrôleur de source (5) étant configuré pour mesurer la circulation de courant pendant l'état de polarité inverse et étant amené à déconnecter la source (1) des bornes de source (31a, 31b) si la mesure de courant sort de limites haute ou basse prédéterminées.

15. Procédé de mise en œuvre d'un système de distribution d'alimentation selon la revendication 1 pour un transfert d'énergie depuis une source (1) jusqu'à une charge (3), le système de distribution d'alimentation étant configuré pour détecter des conditions dangereuses notamment des corps étrangers ou des personnes électriquement conducteurs qui sont entrés en contact avec des conducteurs dénudés dans le système de distribution d'alimentation, le procédé comprenant les étapes suivantes :
a) la génération d'un signal de réaction (40) dans un contrôleur de source (5) comportant des bornes de source (31a, 31b), le signal de réaction (40) inversant une tension sur les bornes de source (31a, 31b) ;
b) la tension sur les bornes de source (31a, 31b) étant inversée, l'acquisition d'une mesure d'un courant électrique circulant à travers les bornes de source (31a, 31b) ; et
c) la génération de signaux (40) depuis le contrôleur de source (5) pour déconnecter électriquement la source (1) des bornes de source (31a, 31b) si et quand le courant électrique sort de limites haute ou basse indiquant l'entrée en contact d'un corps étranger ou d'un organisme vivant conducteur avec les bornes de source ou de charge (31a, 31b, 32a, 32b) ou une défaillance dans le matériel du système de distribution d'alimentation.

16. Procédé selon la revendication 15, dans lequel le contrôleur de source (5) communique avec un contrôleur de charge (9) au moyen d'une liaison de communication optique et/ou conductrice et/ou sans fil (11).

17. Procédé selon la revendication 15, dans lequel le contrôleur de source (5) acquiert un code de vérification numérique auprès d'un contrôleur de charge (9) par le biais d'une liaison de communication (11) et agit pour provoquer la déconnexion électrique de la source (1) des bornes de source (31a, 31b) si le code de vérification numérique n'est pas conforme à un code précédemment stocké qui réside dans la mémoire du contrôleur de source (5) .

18. Procédé selon la revendication 15, dans lequel le système de distribution d'alimentation comporte un pont de commutation de source (7) couplé électriquement au contrôleur de source (5) et réagissant à des signaux de commande (40) provenant du contrôleur de source (5) pour déconnecter électriquement la source (1) des bornes de source, le contrôleur de source (5) agissant pour faire varier une période de temps de polarité directe du pont de commutation de source (7) par rapport à la durée où le pont de commutation de source (7) se trouve dans un état de polarité inverse ou où la source (1) est déconnectée des bornes de source (31a, 31b) de façon à permettre la régulation de l'énergie moyenne transférée depuis la source (1) jusqu'à la charge (3) selon un algorithme exécuté par le contrôleur de source (5).

19. Procédé selon la revendication 15, comprenant en outre :
f) l'exécution d'un code dans le contrôleur de source (5) pour acquérir une mesure du courant électrique circulant à travers les bornes de source (31a, 31b) au moyen d'un capteur de courant (8) ;
g) le stockage de la valeur du courant électrique dans un dispositif de stockage lisible par ordinateur dans le contrôleur de source (5) ; et
h) l'ouverture d'un pont de commutation de source (7) pour déconnecter la source (1) des bornes de source (31a, 31b) si et quand le courant électrique dépasse une valeur maximale prédéterminée.

20. Procédé selon la revendication 15, comprenant en outre l'exécution d'un algorithme dans le contrôleur de source (5) pour calculer une différence entre la tension aux bornes de source acquise par le contrôleur de source (5) au moyen d'un capteur de tension aux bornes de source et une tension aux bornes de charge acquise par le contrôleur de source (5) auprès d'un contrôleur de charge (9), et l'ouverture d'un pont de commutation de source (7) pour déconnecter la source (1) des bornes de source (31a, 31b) si et quand la différence entre la tension aux bornes de source et la tension aux bornes de charge ne s'inscrit pas entre des valeurs haute et basse prédéterminées.

21. Procédé selon la revendication 15, comprenant en outre, au niveau du contrôleur de source (5) :
f) l'acquisition d'une mesure du courant électrique circulant à travers les bornes de source (31a, 31b) au moyen d'un capteur de courant (8) ;
g) l'acquisition d'une mesure de la tension aux bornes de source au moyen d'un capteur de tension ;
h) la multiplication périodique des mesures de la tension aux bornes de source par les mesure du courant de source pour en déduire une valeur de puissance instantanée ; et
i) l'intégration, par rapport au temps, de valeurs de puissance calculées consécutives pour en déduire une valeur d'énergie totale.

22. Procédé selon la revendication 21, comprenant en outre l'application d'une imputation financière à un utilisateur de l'énergie pour l'énergie extraite de la source (1) par l'utilisateur.

23. Procédé selon la revendication 15, dans lequel le contrôleur de source (5) acquiert une première mesure de la tension aux bornes de source au moyen d'un capteur de tension tandis que le pont de commutation de source (7) se trouve dans un état de polarité directe et une deuxième mesure de la tension aux bornes de source immédiatement après que le pont de commutation de source (7) a déconnecté électriquement la source (1) des bornes de source (31a, 31b), et calcule une différence entre les première et deuxième mesures de la tension aux bornes de source, et le contrôleur de source (5) agissant pour déconnecter électriquement la source (1) des bornes de source (31a, 31b) si la différence des tensions aux bornes de source sort de limites haute ou basse prédéterminées.

24. Procédé selon la revendication 23, dans lequel le contrôleur de source (5) acquiert également une mesure du courant électrique circulant à travers les bornes de source (31a, 31b) au moyen d'un capteur de courant (8) tandis que le pont de commutation de source (7) se trouve dans l'état de polarité directe et divise la différence des tensions aux bornes de source par la mesure du courant électrique pour en déduire une valeur pour une résistance des conducteurs entre les bornes de source (31a, 31b) et les bornes de charge (32a, 32b), et le contrôleur de source (5) agissant pour déconnecter la source (1) si la valeur de la résistance sort de limites haute et basse prédéterminées.

25. Procédé selon la revendication 15, comprenant en outre la connexion d'un premier conducteur de sortie d'une circuiterie de source (50) à un point de prise médiane sur une bobine secondaire d'un premier transformateur d'isolement et la connexion d'un deuxième conducteur de sortie de la circuiterie de source (50) à un point de prise médiane sur une bobine secondaire d'un deuxième transformateur d'isolement, un premier conducteur d'entrée d'une circuiterie de charge (51) étant connecté à un point de prise médiane sur une bobine primaire d'un troisième transformateur d'isolement et un deuxième conducteur d'entrée de la circuiterie de charge (51) étant connecté à un point de prise médiane d'une bobine primaire sur un quatrième transformateur d'isolement, de sorte que la configuration annule sensiblement tout flux produit dans les quatre transformateurs du fait de la circulation de courant depuis la circuiterie de source (50) vers la circuiterie de charge (51), et les bornes inutilisées restantes des quatre transformateurs pouvant être utilisées pour émettre et recevoir des données qui sont électriquement isolées et indépendantes du courant électrique circulant depuis la circuiterie de source (50) vers la circuiterie de charge (51).

26. Procédé selon la revendication 25, dans lequel les données sont communiquées au moyen de la technologie Ethernet.

27. Procédé selon la revendication 25, dans lequel les données sont communiquées au moyen de la technologie des lignes d'abonnés numériques.
